(19) Europäisches Patentamt / European Patent Office / Office européen des brevets

(11) **EP 2 584 309 B1**

(12) **EUROPEAN PATENT SPECIFICATION**

(45) Date of publication and mention of the grant of the patent:
**10.01.2018   Bulletin 2018/02**

(21) Application number: **11795406.5**

(22) Date of filing: **15.06.2011**

(51) Int Cl.:
*G01C 3/06* (2006.01)      *G02B 7/28* (2006.01)
*G03B 13/36* (2006.01)     *H04N 5/232* (2006.01)
*G06T 7/00* (2017.01)      *H04N 5/222* (2006.01)

(86) International application number:
**PCT/JP2011/003397**

(87) International publication number:
**WO 2011/158498 (22.12.2011 Gazette 2011/51)**

(54) **IMAGE CAPTURE DEVICE AND IMAGE CAPTURE METHOD**

BILDAUFNAHMEVORRICHTUNG UND BILDAUFNAHMEVERFAHREN

DISPOSITIF ET PROCÉDÉ DE CAPTURE D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2010   JP 2010136666**

(43) Date of publication of application:
**24.04.2013   Bulletin 2013/17**

(73) Proprietor: **Panasonic Corporation**
**Kadoma-shi**
**Osaka 571-8501 (JP)**

(72) Inventors:
• **TAGAWA, Junichi**
  **Chuo-ku, Osaka-shi, Osaka 540-6207 (JP)**
• **SUGITANI, Yoshiaki**
  **Chuo-ku, Osaka-shi, Osaka 540-6207 (JP)**
• **KAWAMURA, Takashi**
  **Chuo-ku, Osaka-shi, Osaka 540-6207 (JP)**
• **KIMURA, Masayuki**
  **Chuo-ku, Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(56) References cited:
JP-A- 2008 292 240      JP-A- 2010 039 448
JP-A- 2010 066 156      JP-A- 2010 072 491
US-A1- 2007 019 883     US-A1- 2008 013 941
US-A1- 2008 187 305     US-A1- 2010 141 735

## Description

[Technical Field]

The present invention relates to an imaging apparatus or method for measuring, based on a captured image, a distance between an object and the imaging apparatus.

[Background Art]

As a conventional method of measuring, based on a captured image, a distance between an object and an imaging apparatus, a method called Depth From Defocus (DFD) is generally known in which a distance is estimated by using blur of an observed image (for example, refer to Non Patent Literature 1). The DFD method which is proposed in Non Patent Literature 1 (hereafter called a Pentland et al. method) pays attention to an edge of an image, estimates an amount of blur from one or two observed images including blur, and estimates a distance to an object based on the amount of blur. However, because this method requires in advance edge information about an image of an object and blur caused by a lens occurs in observed images of a conventional imaging apparatus, thus making it difficult to stably and highly precisely estimate distance information.

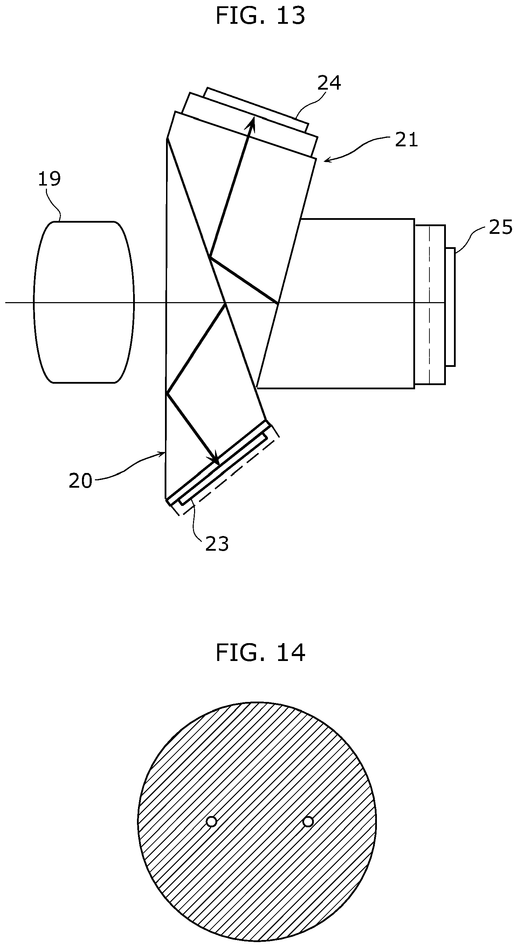

Meanwhile, a distance measuring apparatus proposed in Patent Literature 1 uses a multi-focus camera and a coding opening to reduce instability in measuring a distance caused by blur, which is a problem with the Pentland et al. method. FIG. 13 shows an example of the multi-focus camera used in Patent Literature 1 and FIG. 13 shows the coding opening (optical aperture). In Patent Literature 1, the multi-focus camera of FIG. 13 simultaneously captures three images having different focal points, that is, different kinds of blur, and estimates a distance to the object based on a blur difference between the captured images. Here, when an aperture of the multi-focus camera (disposed on a left side of a lens 19 in FIG. 13) is set in a form of FIG. 14, a gain of frequency characteristics of blur becomes the absolute value of a cosine function and it is known to have characteristic properties, that is, of being easy to detect even a slight blur difference among images, as compared to frequency characteristics of blur in a case of a normal shape of round eye (low-pass filter (LPF)). With the characteristics, compared with the Pentland et al. method, Patent Literature 1 makes it possible to stably and highly precisely estimate a distance to an object based on captured images.

[Citation List]

[Patent Literature]

[PTL 1]

Japanese Patent No. 2963990 Document US20070019883 A1 discloses an imaging apparatus capable of taking a plurality of images of a scene, covering the entire focal range. Based on these images an all-in-focus image is generated. A blur amount of one of the captured images is calculated from the near end image, the far end image and the all-in-focus image.

[Non Patent Literature]

[NPL 1]
A. P. Pentland: "A new sense for depth of field", IEEE Transaction on Pattern Analysis and Machine Intelligence, 9, 4, pp. 523-531 (1987).
[NPL 2]
H. Nagahara, S. Kuthirummal, C. Zhou, and S. Nayar, "Flexible depth of field photography," in Proc. European Conference on Computer Vision, vol. 4, 2008, pp. 60-73.

[Summary of Invention]

[Technical Problem]

However, there are the three following problems with the method of PTL 1.

1. Complex camera configuration

Three image sensors 23, 24, and 25 and spectrum prisms 20 and 21, as shown in FIG. 13, are used in order to simultaneously capture three images having different focal points, and therefore an apparatus needs to be magnified and make high-precision adjustments. The characteristics are a large problem for a consumer-targeted camera in terms of product cost. Moreover, because the three focal points of the camera are fixed, it is difficult to dynamically change an image magnification (zoom factor) for a measurement object and a measurement range, resulting in restrictions on a scene of using a camera.

2. Decrease in light amount

A coding opening in a configuration shown in FIG. 14 is used for making a marked difference in blur caused by a distance to the object, but, as is obvious from FIG. 14, an aperture needs to be narrowed down in this coding opening, inevitably resulting in a large decrease in light amount of light beams to form an image on an image capturing plane with respect to a maximum aperture. In other words, there is a large decrease in image capturing sensitivity as a camera.

3. High calculation cost

In order to estimate a distance, an evaluation function represented in Expression 1 is formed from three images having different focal lengths and the evaluation function is repeatedly calculated and is minimized by varying a value of a distance (v). Such an estimation-type repeated calculation generally needs a high calculation cost and it is preferable that a method of determinately calculating a distance without an evaluation function be used in a consumer-targeted camera.

[Math. 1]

$$r_{mn}(v) = \sum_s \left| \frac{I_m(s,y)}{I_n(s,y)} - \frac{\cos\left(2\pi\alpha \frac{v-w_m}{f} s\right)}{\cos\left(2\pi\alpha \frac{v-w_n}{f} s\right)} \right|$$

(Expression 1)

The present invention has been conceived to solve the aforementioned problem and has an object to provide an imaging apparatus to generate a depth map of an object based on a plurality of captured images with a simple camera configuration, no damage on the light amount, and a low calculation cost.

[Solution to Problem]

Aspects of the invention are set out in the appended claims.

According to this configuration, because by generating an all-in-focus image without blur from one of the images, an amount of blur of the other image can be directly evaluated, distance estimation is possible without prior information about an object including edge information and distance estimation can be stably implemented compared with the Pentland et al. method cited in the conventional example.

Moreover, compared with PTL 1, it is possible to capture images having different focal points with one image sensor and to simplify a camera configuration (a consumer-targeted camera generally includes an image sensor driving unit such as a dust removing apparatus using vibration), and because an all-in-focus image can be directly captured, there is no need of a coding opening to stably compare blurred images and there is no decrease in light amount.

Deconvolution processing (inverse convolution) of other images and the all-in-focus image allows for direct evaluation of an amount of blur, thus making it possible to dispense with repeated calculations with an evaluation function and to reduce the calculation cost.

It is noted that the present invention can be implemented not only as an imaging apparatus including these characteristic processing units but also as an imaging method in which processing performed by the characteristic processing units is implemented as steps. Moreover, the characteristic steps included in the imaging method can be implemented as a program for causing a computer to execute the steps. Then such a program can be naturally distributed via a computer-readable non-volatile memory medium such as Compact Disc-Read Only Memory (CD-ROM) and other communication networks such as the Internet.

[Advantageous Effects of Invention]

An imaging apparatus according to the present invention makes it possible to generate a depth map of an object based on a plurality of captured images with a simple camera configuration, no damage on the light amount, and a low calculation cost.

[Brief Description of Drawings]

[Fig. 1]

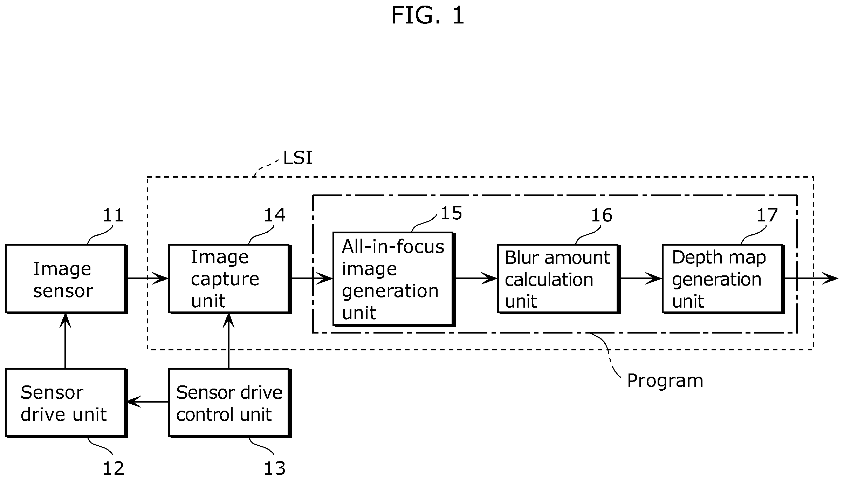

FIG. 1 is a block diagram showing a configuration of an imaging apparatus according to an embodiment of the present invention.
[Fig. 2]

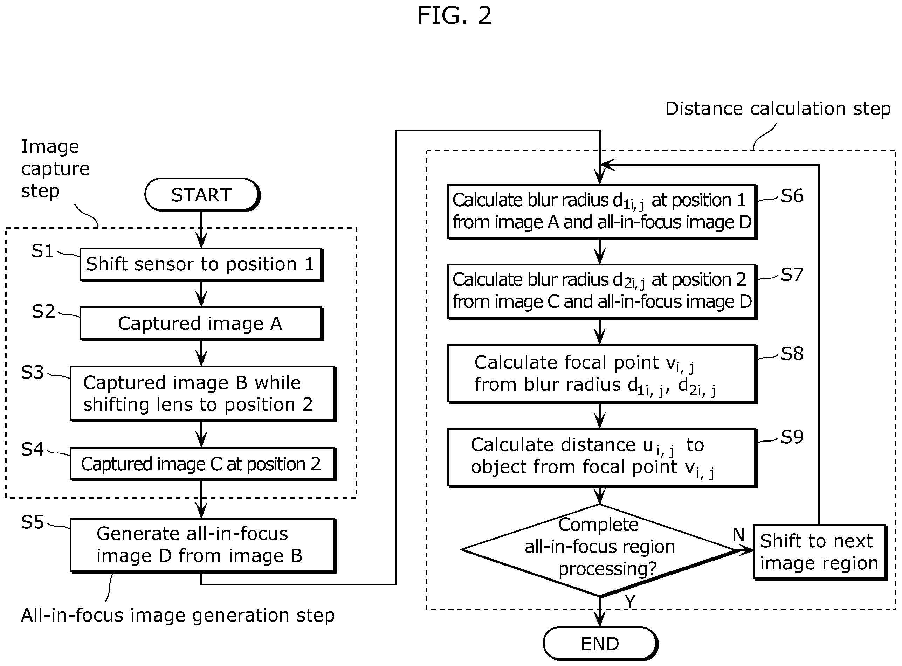

FIG. 2 is a flowchart showing distance calculation processing operations according to the embodiment of the present invention.
[Fig. 3]

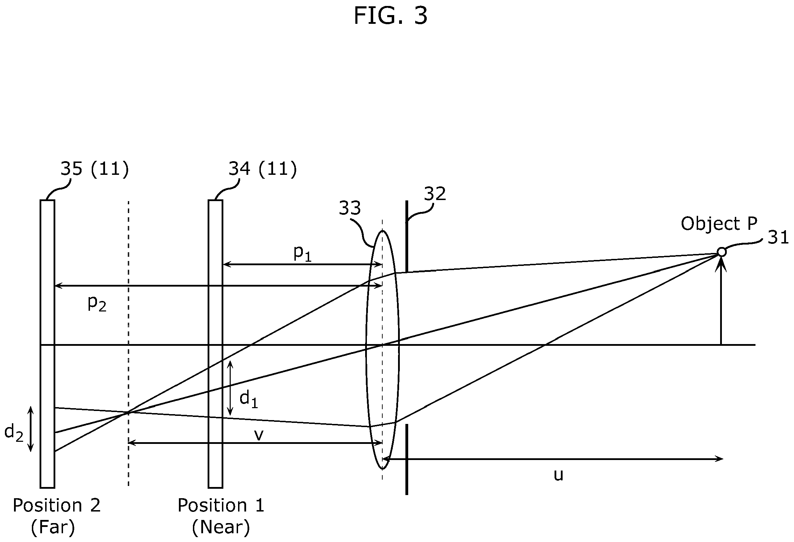

FIG. 3 is a diagram geometrically illustrating a size of blur at each of the image capturing positions according to the embodiment of the present invention.
[Fig. 4]

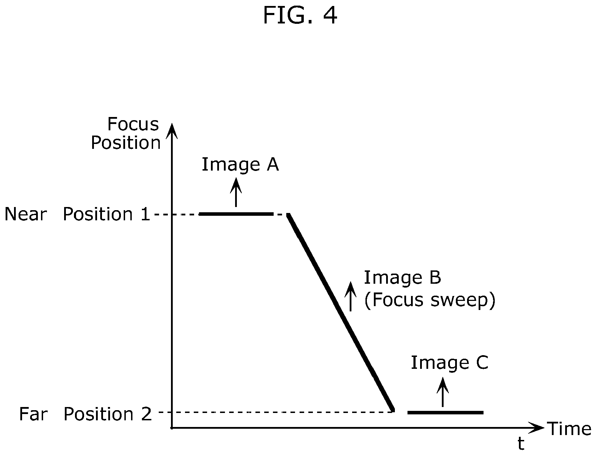

FIG. 4 is a diagram illustrating a transition of image capturing positions of three captured images according to the embodiment of the present invention.
[Fig. 5]

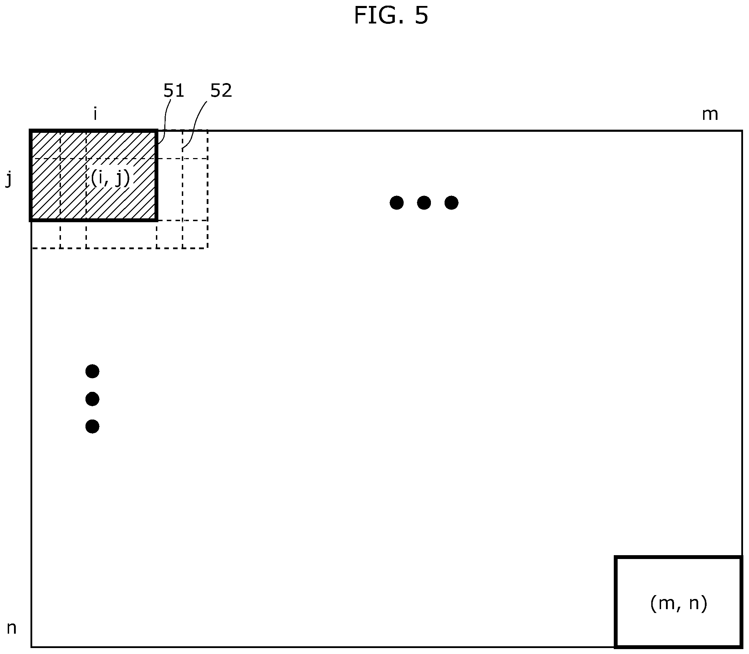

FIG. 5 is a diagram illustrating an image region which is a unit for calculating a distance between the imaging apparatus and an object according to the embodiment of the present invention.
[Fig. 6]

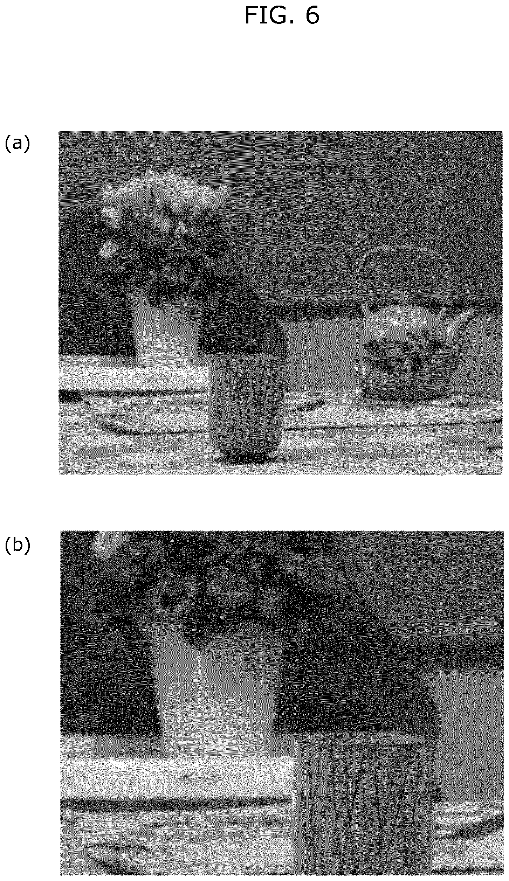

FIG. 6 illustrates, in (a) and (b), an example of captured images (near end images) A according to the embodiment of the present invention.
[Fig. 7]

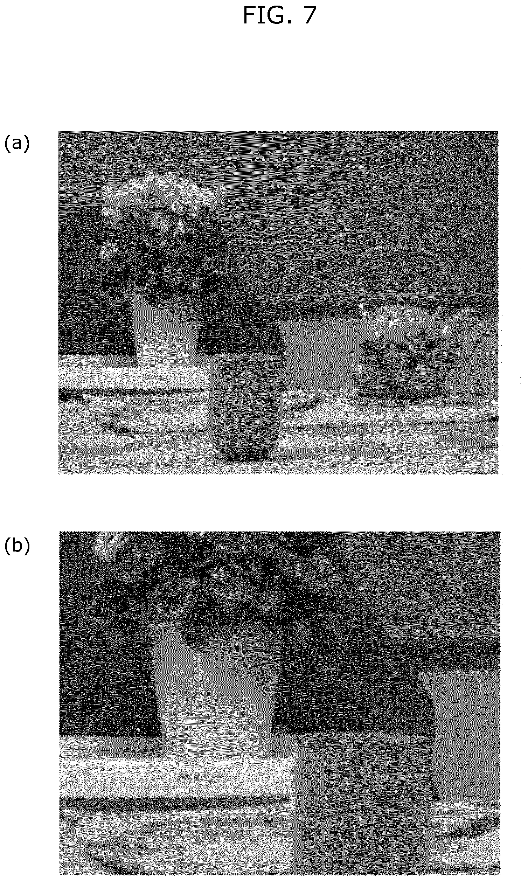

FIG. 7 illustrates, in (a) and (b), an example of captured images (sweep images) B according the embodiment of the present invention.
[Fig. 8]

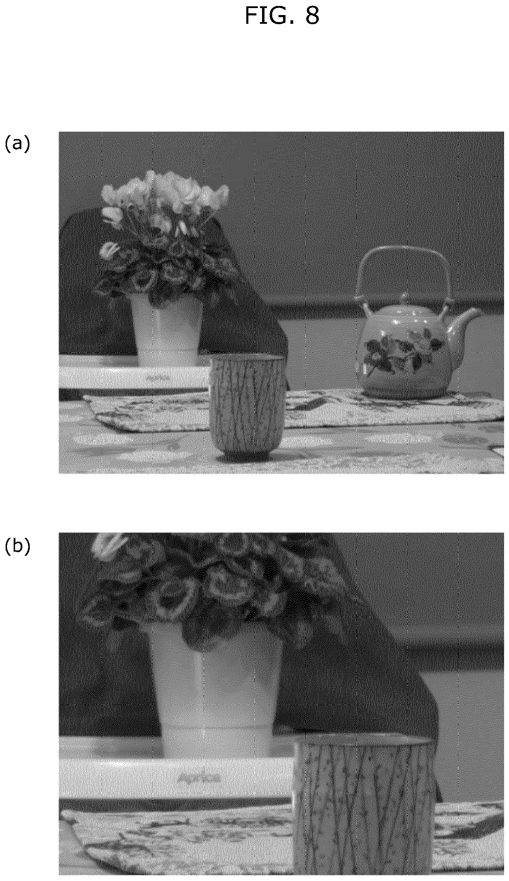

FIG. 8 illustrates, in (a) and (b), an example of captured images (far end images) C according to the embodiment of the present invention.
[Fig. 9]

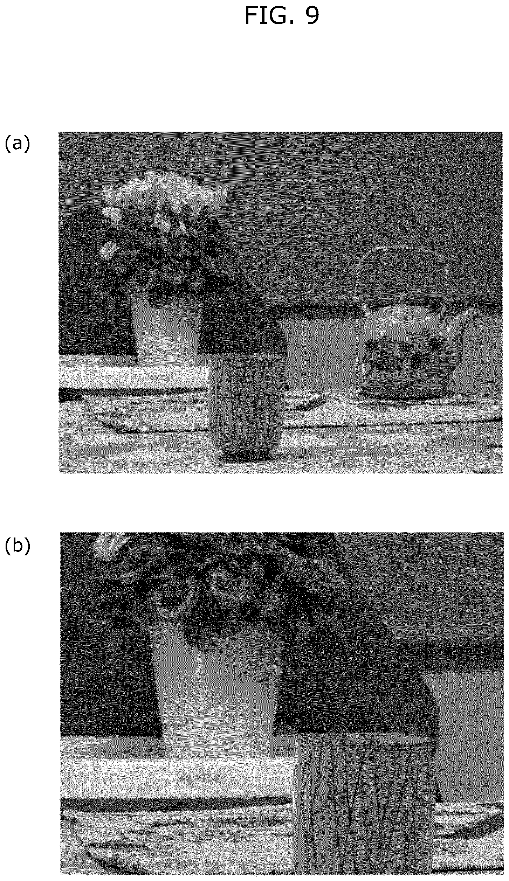

FIG. 9 illustrates, in (a) and (b), an example of all-in-focus images D generated from the sweep images according to the embodiment of the present invention.
[Fig. 10]

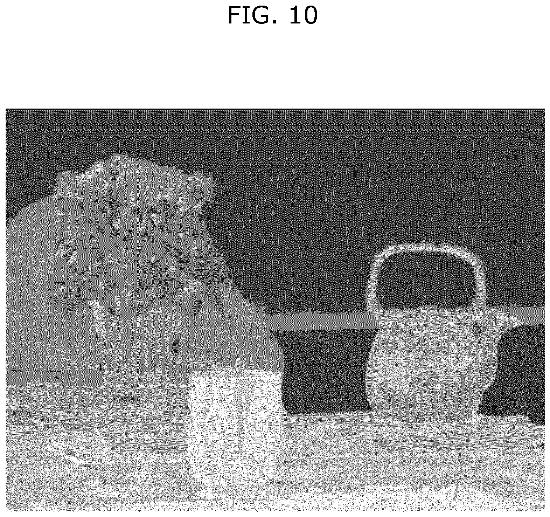

FIG. 10 illustrates an example of a depth map generated according to the embodiment of the present invention.
[Fig. 11]

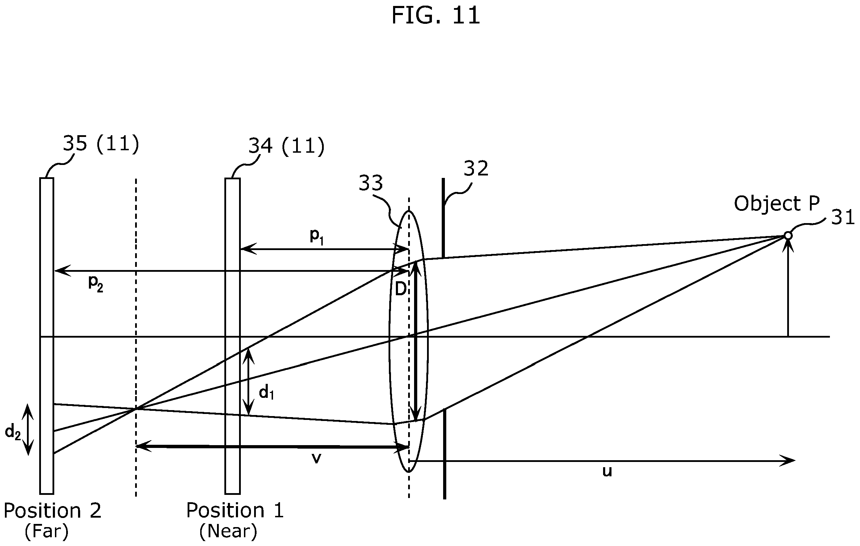

FIG. 11 is a diagram illustrating Expression 9 to calculate a focal length by using the near end image and the all-in-focus image.
[Fig. 12]

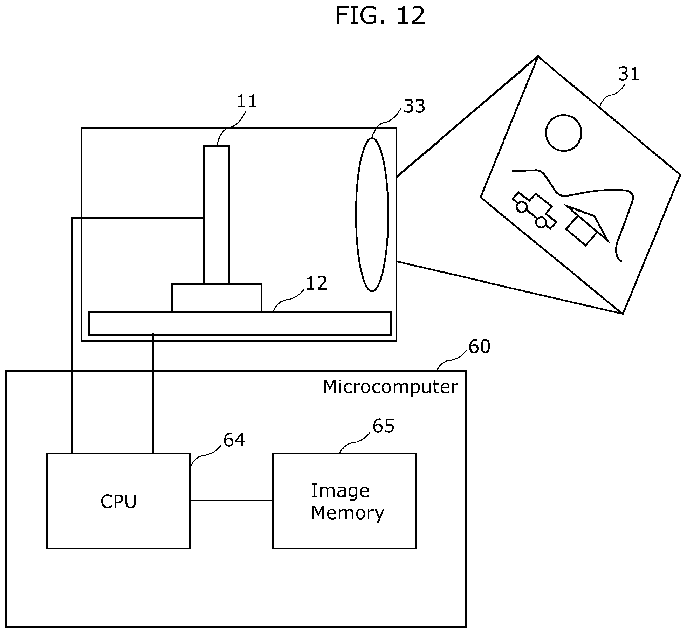

FIG. 12 is a block diagram showing an example of a configuration of the imaging apparatus including a microcomputer according to the embodiment of the present invention.
[Fig. 13]
FIG. 13 illustrates an example of a multi-focus camera used in a conventional distance measuring apparatus.
[Fig. 14]
FIG. 14 illustrates an example of a coding opening used in the conventional distance measuring apparatus.

[Description of Embodiment]

Hereafter, the embodiment of the present invention will be described with reference to the drawings.

[Embodiment 1]

FIG. 1 is a block diagram of an imaging apparatus according to Embodiment 1 of the present invention.

In FIG. 1, the imaging apparatus includes an image sensor 11, a sensor drive unit 12, a sensor drive control unit 13, an image capture unit 14, an all-in-focus image generation unit 15, a blur amount calculation unit 16, and a depth map generation unit 17. In a configuration of the imaging apparatus, constituent elements which can be integrated into a single chip of integrated circuit are represented in a dashed-line box, but the image capture unit 14 may be a separate entity from the integrated circuit because the image capture unit 14 is a memory. Meanwhile, in the configuration of the imaging apparatus, constituent elements which can be implemented by a program are represented in a dashed-line box.

The image sensor 11 is a complementary-symmetry metal-oxide semiconductor (CMOS), a charge-coupled device (CCD), and the like, and captures light at an image capturing plane, converts the light into an electrical signal for each pixel, and outputs the electrical signal. The sensor drive unit 12 arbitrarily shifts a position in an optical axis direction of the image sensor 11 by using a linear motor, a piezoelectric element, or the like based on control from the sensor drive control unit 13 to be described later. The sensor drive control unit 13 controls operation timing and the like for the sensor drive unit 12 and the image capture unit 14 to be described later such that a plurality of images having focal points different from each other are captured. The image capture unit 14 captures images captured by the image sensor 11 and holds the captured images at a timing according to a control signal from the sensor drive control unit 13. The all-in-focus image generation unit 15, from an image (for example, sweep image) among the images captured by the image capture unit 14, generates, by signal processing, an all-in-focus image which is focused across the entire region of the image. The blur amount calculation unit 16 calculates, from an image of a specific focal length captured by the image capture unit 14 (another image, for example, near end image or far end image) and an all-in-focus image generated by the all-in-focus image generation unit 15, an amount of blur in each of the image regions of the other image by signal processing. The depth map generation unit 17 calculates a distance between the imaging apparatus and an object in each of the image regions using the amount of blur, in each of the image regions in the other image, calculated by the blur amount calculation unit 16 and using an optical coefficient value of the imaging apparatus including a focal length, and then generates a depth map indicating the calculated distance using a pixel value in each of the image regions.

Hereafter, a process for measuring a distance between the imaging apparatus and the object by the imaging apparatus will be described with reference to FIG. 2 to 5. FIG. 2 shows a processing flowchart, FIG. 3 shows a geometric illustration of a size of blur in each of the image capturing positions, FIG. 4 shows a transition of image capturing positions of three images captured by the imaging apparatus, and FIG. 5 shows segmentation of image regions for calculating a distance.

An outline of processing includes generating an all-in-focus image from an image captured while shifting the image sensor 11 (hereafter called sweep image), estimating an amount of blur in each of the image regions from the all-in-focus image and an image capturing position, in other words, two kinds of images having different blur, and calculating, from the amount of blur, a distance between the imaging apparatus and the object in each of the image regions. Hereafter, processing will be sequentially described in detail with reference mainly to FIG. 2.

The processing is largely composed of (i) an image capture step, (ii) an all-in-focus image capture step, and (iii) a distance calculation step.

(i) In the image capture step, the image capture unit 14 captures three images having different image capturing positions.

First, in step S1, the sensor drive control unit 13 controls the sensor drive unit 12 and shifts the image sensor 11 to a position 1. After the shift is completed, in step S2, the image capture unit 14 captures and holds an image A which is focused on a near end side of an object 31 in FIG. 3. FIG. 6 illustrates, in (a), an example of the image A, and illustrates, in (b), an enlarged view of a part of the image A shown in (a) of FIG. 6. As is obvious from (a) of FIG. 6 and (b) of FIG. 6, it can be seen that a tea cup in a position near the imaging apparatus is focused.

Next, in step S3, the sensor drive control unit 13 controls the sensor drive unit 12 such that the image sensor 11 shifts from the position 1 to a position 2 at a constant speed during image capture by the image sensor 11, and the image capture unit 14 captures and holds a sweep image B. FIG. 7 illustrates, in (a), an example of the image B, and illustrates, in (b), an enlarged view of a part of the image B shown in (a) of FIG. 7.

Finally, in step S4, the image capture unit 14 captures and holds the image C which is focused on a far end side of an object 31 at the position 2 in which a shift is completed in step S3. FIG. 8 illustrates, in (a), an image showing an example of the image C, and illustrates, in (b), an enlarged view of a part of the image C shown in (a) of FIG. 8. As is obvious from (a) of FIG. 8 and (b) of FIG. 8, it can be seen that a tea cup in a position far away from the imaging apparatus is focused.

(ii) Next, in step S5 of generating an all-in-focus image, the all-in-focus image generation unit 15 generates an all-in-focus image D from the sweep image B captured through the image capture step. FIG. 9 illustrates , in (a), an image showing an example of the image D, and illustrates, in (b), an enlarged view of a part of the image D shown in (a) of FIG. 9. As is obvious from (a) of FIG. 9 and (b) of FIG. 9, all pixels are focused.

As disclosed in NPL 2, a sweep image captured through the shift of the image sensor at a constant speed becomes a uniformly blurred image in the entire image region, in other words, uniform blur can be captured in each of the image regions regardless of a distance between the object and the imaging apparatus (Depth Invariant). Here, by assuming that a blur function convolved into a captured image by sweeping the image sensor is IPSF, the IPSF, for example, in Expression 7 described in NPL 2, is uniquely determined by a moving distance of the image sensor and a lens model regardless of a distance to the object. Assuming that a Fourier transform of the sweep image B is $I_{sweep}$ and a Fourier transform of blur function IPSF is $H_{ip}$, a Fourier transform $I_{aif}$ of an all-in-focus image without blur can be evaluated by Expression 2.

[Math. 2]

$$I_{aif} = \frac{I_{sweep}}{H_{ip}}$$

(Expression 2)

The right side of Expression 2 is constant regardless of a distance to the object, in other words, an all-in-focus image C whose blur is eliminated can be generated through deconvolution of the sweep image B with Depth Invariant blur function IPSF.

(iii) In the distance calculation step, a blur radius (amount of blur) in each of the partial regions of the captured image is evaluated, and, based on the blur radius, a distance to the object is calculated for each of the image regions. First, a method of evaluating the blur radius from the captured image will be described with reference to FIG. 3. FIG. 3 is a diagram showing a positional relationship between an object and an optical system of the imaging apparatus. FIG. 3 shows the object 31, an aperture 32, a lens 33, an image sensor 34 at the position 1, and an image sensor 35 at the position 2.

In FIG. 3, the object 31 is disposed at a distance u from a principal point position of the lens 33, while the image sensor 34 is disposed at the position 1 at a distance v from a principal point position of the lens 33. A light beam coming from the object 31 passes through the lens 33 and an image is formed in the image sensor 34 disposed at the position 1. At this time, a Fourier transform $I_A$ of the observed image A is captured by multiplication of the Fourier transform $I_{pu}$ of an image of the subject 31 by transfer function GI of the lens 33, and can be expressed by Expression 3.

[Math. 3]

$$I_A = GI \cdot I_{p_u}$$

(Expression 3)

In Expression 3, the transfer function GI represents a component of blur and the Fourier transform $I_{pu}$ of the image of the object 31 represents a light beam itself of the object 31 without blur, and therefore it is possible to use the Fourier transform $I_{aif}$ of the all-in-focus image evaluated by Expression 2 instead of $I_{pu}$. Therefore, the transfer function GI can be evaluated by transforming Expression 3 and deconvolution of the Fourier transform $I_A$ of the captured image A with the Fourier transform $I_{aif}$ of the all-in-focus image.

[Math. 4]

$$GI = \frac{I_A}{I_{aif}}$$

(Expression 4)

Meanwhile, an inverse Fourier transform of the transfer function GI is a point spread function (PSF) of a lens, and, for example, assuming that a PSF model of a lens is a general Gaussian PSF, the PSF of the lens can be expressed by Expression 5.
[Math. 5]

$$PSF(r, u, v) = \frac{2}{\pi(gd_1)^2} \exp\left(-\frac{2r^2}{(gd_1)^2}\right)$$

(Expression 5)

Here, r is a distance from a center of the PSF, $d_1$ is a blur radius at the position 1, and g is a constant. From Expression 5, it can be seen that a PSF configuration with the distance u of the object 31 and the distance v of the image sensor 34 is uniquely determined by a blur radius d and a distance r from the center of the PSF. Because the PSF on the left side of Expression 5 can be evaluated by an inverse Fourier transform of the transfer function GI evaluated by Expression 4, from Expression 5, from r = 0, in other words, from a peak strength of the PSF on the left side, the blur radius $d_1$ can be calculated.

Because, in a normal captured image, a distance from the imaging apparatus is different for each object, a PSF at a time when an image is formed in the image sensor 34, captured by Expression 5, is also different for each position of the region where an image is formed. Therefore, after segmentation in advance, into a plurality of regions, of an image captured from the image sensor 34 and a clip after window function processing such as Blackman window, the blur radius calculation processing is performed for each region.

FIG. 5 is a diagram illustrating an image region to be clipped, showing an image clipping position 51 of a region (i, j) and an image clipping position 52 of a region (i, j + 1). The blur amount calculation unit 16 and the depth map generation unit 17 clip, as shown in FIG. 5, images in order while overlap images and perform a process for each unit of the clipped regions. Hereafter, processing in each of the regions will be described in order.

In step S6, the blur amount calculation unit 16 clips, after window function processing, a region (i, j) corresponding to each of the image A captured in the image capture step and the all-in-focus image D generated in the all-in-focus generation step, and calculates a blur radius $d_{1(i,j)}$ in the region (i, j) with the image sensor 11 at the position 1 by substituting the Fourier transforms $I_{A(i,j)}$ and $I_{aif(i,j)}$ of the clipped regions into Expression 4 and Expression 5.

Similarly, in step S7, the blur amount calculation unit 16 clips, after window function processing, a region (i, j) corresponding to each of the image C captured in the image capture step and the all-in-focus image D generated in the all-in-focus generation step, and calculates a blur radius $d_{2(i,j)}$ in the region (i, j) with the image sensor 11 at the position 2 by substituting the Fourier transforms $I_{C(i,j)}$ and $I_{aif(i,j)}$ of the clipped regions into Expression 4 and Expression 5.

In step S8, the depth map generation unit 17 calculates, from the blur radius $d_{1(i,j)}$ and the blur radius $d_{2(i,j)}$ evaluated through steps S6 and S7, a focal point $v_{(i,j)}$ at which an object in the image region (i, j) is focused. A geometric relationship among $d_{1(i,j)}$, $d_{2(i,j)}$, and $v_{(i,j)}$ is shown as in FIG. 4, and can be evaluated by Expression 6 based on a distance $p_1$ between the position 1 of the image sensor 11 and the principal point of the lens and a distance $p_2$ between the position 2 of the image sensor 11 and the principal point of the lens.
[Math. 6]

$$v_{(i,j)} = \frac{p_1 d_{2(i,j)} + p_2 d_{1(i,j)}}{d_{1(i,j)} + d_{2(i,j)}}$$

(Expression 6)

In step S9, the depth map generation unit 17 evaluates, from $v_{(i,j)}$ evaluated by step S8, a distance $u_{(i,j)}$ between the object in the image region (i, j) and the principal point of the lens. Assuming that a focal length of the lens is $f_L$, $u_{(i,j)}$ can be evaluated by Gauss's formula of Expression 7.
[Math. 7]

$$\frac{1}{u_{(i,j)}} + \frac{1}{v_{(i,j)}} = \frac{1}{f_L}$$

(Expression 7)

When a principal point position of the lens is regarded as a position of the imaging apparatus, a distance between the object in the image region (i, j) and the imaging apparatus is $u_{(i,j)}$.

The blur amount calculation unit 16 and the depth map generation unit 17 can generate a distance in the entire image region, in other words, a depth map by processing of steps S6 to S9 with the entire image region, in other words, i = 0 to m and j= 0 to n. FIG. 10 illustrates an example of a depth map generated by using the image A, the image B, and the image D illustrated in FIG. 6, FIG. 7, and FIG. 9, respectively. In FIG. 10, a distance from the imaging apparatus to the object is indicated by a brightness value of each of the pixels, representing that when the brightness value is larger (more white), the object is in a position nearer to the imaging apparatus and that when the brightness value is smaller (more black), the object is in a position farther away from the imaging apparatus. For example, since a tea cup is displayed more white than a flower pot, it can be seen that the tea cup is in a position near the imaging apparatus than the flower pot.

According to this configuration, an all-in-focus image is generated from a sweep image captured during a shift of the image sensor 11. Moreover, this all-in-focus image and two different images captured at image capturing positions at a far end side and a near end side of the object before and after sweep are deconvoluted for each of corresponding image regions, so that an amount of blur is estimated for each of the image regions. Furthermore, the distance between the imaging apparatus and the object in each of the image regions is calculated from the amount of blur. With this, a depth map of the object can be generated without degradation in sensitivity caused by restricting light amount by a special aperture and without repeated calculations for searching the most appropriate solution, both of which are shown in the conventional example.

The imaging apparatus according to the embodiment of the present invention is described, but the present invention is not limited to this embodiment.

For example, in the embodiment, a Gaussian model like Expression 5 is used as a PSF model of a lens for estimating an amount of blur, but a model other than the Gaussian model is acceptable as long as the model has already known characteristics and reflects characteristics of the actual imaging apparatus. A generally known pillbox function, for example, is acceptable. Moreover, it is possible to adopt a configuration in which an amount of blur is not defined as a mathematical expression model, a database is formed by shifting a focal point in stages and measuring PSF characteristics in advance, and the amount of blur is estimated with reference to values of the database.

It is noted that in the case where a pillbox function is used as a PSF model of a lens for estimating the amount of blur, the PSF model is represented by an expression like the following Expression 8. Here, r is a distance from the center of the PSF, and $d_1$ is the blur radius at the position 1. In this way, even if Expression 8 is used, a configuration of the PSF with the distance u of the object 31 and the distance v of the image sensor 34 is uniquely determined by the blur radius $d_1$ and the distance r from the center of the PSF.

[Math. 8]

$$PSF(r, u, v) = \frac{4}{\pi d_1^2} \prod\left(\frac{r}{d_1}\right)$$

(Expression 8)

Moreover, in the above mentioned embodiment, the distance $u_{(i,j)}$ between the object and the principal point of the lens is evaluated by Expression 6 based on the blur radius $d_{1(i,j)}$ in the region (i, j) with the image sensor 11 at the position 1 and the blur radius $d_{2(i,j)}$ in the region (i, j) with the image sensor 11 at the position 2. However, the present invention is not limited to this, and a focal length may be calculated with a blur radius at one of the positions 1 and 2. For example, an example in which a focal length $v_{(i,j)}$ is calculated from the blur radius at the position 1 will be described hereafter. FIG. 11 illustrates an expression for calculating the focal length $v_{(i,j)}$ by using the blur radius at the position 1. In this case, an expression for calculating the focal length $v_{(i,j)}$ from the blur radius $d_{1(i,j)}$ at the position 1 is Expression 9. Here, in Expression 9, D is an aperture size of a lens.

[Math. 9]

$$v_{(i,j)} = \frac{D}{D - d_{1(i,j)}} p_1$$

(Expression 9)

Moreover, in the present embodiment, an image forming position is shifted by driving a sensor so as to capture images having different focal points, but a lens can be shifted instead of the sensor. Specifically, it is possible to introduce a configuration in which the sensor drive unit and the sensor drive control unit according to the present embodiment may be replaced with a lens drive unit and a lens control unit, respectively, and a lens is shifted so as to capture images having different focal points.

In the present embodiment, a configuration in which an image is formed by a lens as in FIG. 3 is described, but a coupling lens made of a plurality of lenses may be used. In that case, a distance can be calculated according to the present embodiment by using the principal point position of the coupling lens already known in advance at a time of designing.

Moreover, an image-space telecentric lens having characteristics of forming an image with light beams in parallel on an image space of the image sensor 11 may be used for a lens used in the present embodiment. In this case, because a multiplication for an image formed in an image sensor is not varied by a focal point even if the image sensor and the lens are shifted, an image of the sweep image B can be captured in an ideal state of blur. In other words, the all-in-focus image D can be generated with better characteristics in the all-in-focus image generation unit and, eventually, characteristics of generating a depth map can also be better.

Moreover, part of the above mentioned imaging apparatus may be implemented by a microcomputer including a CPU and an image memory.

FIG. 12 is a block diagram showing an example of a configuration of the imaging apparatus including the microcomputer.

The imaging apparatus includes the image sensor 11, the sensor drive unit 12, and a microcomputer 60. It is noted that the lens 33 is installed on a front plane of the image sensor 11 to collect light from the object 31.

The microcomputer 60 includes a CPU 64 and an image memory 65.

The CPU 64 executes a program for functioning the microcomputer 60 as the sensor drive control unit 13, the image capture unit 14, the all-in-focus image generation unit 15, the blur amount calculation unit 16, and the depth map generation unit 17, all of which are shown in FIG. 1. In other words, the CPU 64 executes a program for executing processing of each step in the flowchart shown in FIG. 2. It is noted that images captured by the image capture unit 14 are held in the image memory 65.

Furthermore, part or all of the constituent elements of the above mentioned imaging apparatus may be composed of a unit of system large scale integration (LSI). The system LSI is a super-multi-function LSI manufactured by integrating constituent units on one chip, and is specifically a computer system configured to include a microprocessor, a Read Only Memory (ROM) and a Random Access Memory (RAM). In the RAM, a computer program is stored. The system LSI achieves its function through an operation of the microprocessor according to the computer program.

Furthermore, part or all of the constituent elements composed of the above mentioned imaging apparatus may be composed of an IC card detachable from an imaging apparatus or a single module. The IC card or the module is a computer system including a microprocessor, a ROM, a RAM, and the like. The IC card or the module may include the super-multi-function LSI. The IC card or the module performs its function by the microprocessor being caused to operate according to the computer program. The IC cared or the module may have tamper resistance.

Moreover, the present invention may be the above mentioned methods. Moreover, a computer program for executing these methods by a computer and digital signals composed of the computer program are acceptable.

Furthermore, the present invention may be what is recorded on a computer-readable non-volatile storage medium, for example, a flexible disk, a hard disk, a CD-ROM, a magneto-optical disc (MO), a Digital Versatile Disc (DVD), a DVD-ROM, a DVD-RAM, a BD (Blu-ray Disc (registered trademark)), a semiconductor memory, and the like. Moreover, the above mentioned digital signals recorded on these non-volatile storage media are acceptable.

Moreover, the present invention may be something to transmit the above mentioned computer program or digital signals via an electrical communication line, a wireless or wired communication line, a network represented by the Internet, data broadcast, and the like.

Moreover, the present invention may be a computer system including a microprocessor and a memory, the memory may store the computer program, and the microprocessor may operate according to the computer program.

Moreover, it is possible to be implemented by transferring the program or the digital signals stored on the non-volatile storage medium, transferring the program or the digital signals via the network and the like, and by a different independent computer system.

The embodiment disclosed this time is exemplified in all respects and the present invention shall not be restricted thereby. The scope of the present invention is indicated not by the above description but the scope of claims.

[Industrial Applicability]

The imaging apparatus according to the present invention is characterized by generating a high-precision depth map based on a captured image and can be used as a rangefinder to easily measure a form of an object from a separate location. Moreover, it can be used as a three-dimensional (3D) camera which generates a 3D image by generating an image of disparity between right and left from a depth map from the generated all-in-focus image.

[Reference Signs List]

11    Image sensor
12    Sensor drive unit
13    Sensor drive control unit
14    Image capture unit
15    All-in-focus image generation unit
16    Blur amount calculation unit
17    Depth map generation unit
31    Object
32    Aperture
33    Lens
34    Image sensor at position 1
35    Image sensor at position 2
51    Clip range of image region (i, j)
52    Clip range of image region (i, j + 1)
60    Microcomputer
64    CPU
65    Image memory

**Claims**

1. An imaging apparatus which generates, based on an image of an object, a depth map indicating a distance from said imaging apparatus to the object, said imaging apparatus comprising:

   an image sensor (11) which captures light at an image capturing plane, converts the light into an electrical signal for each pixel, and outputs the electrical signal;
   a sensor drive unit (12) configured to arbitrarily shift a position in an optical axis direction of said image sensor (11);
   an image capture unit (14) configured to capture an image captured by said image sensor (11), and hold the captured image;
   a sensor drive control unit (13) configured to control operations of said sensor drive unit (12) and said image capture unit (14) such that a plurality of images are captured at focal points different from each other and one of the images is a sweep image that is captured during exposure through a shift of the position in the optical axis direction of said image sensor;
   an all-in-focus image generation unit (15) configured to generate, from the sweep image captured by said image capture unit (14), an all-in-focus image of which an entire region of the sweep image is focused;
   a blur amount calculation unit (16) configured to calculate an amount of blur in each of a plurality of image regions of another image different from the sweep image; and
   a depth map generation unit (17) configured to (i) calculate, from an amount of blur in each of the image regions of that other image calculated by said blur amount calculation unit (16) and from an optical coefficient value of said imaging apparatus including a focal length of a lens, the distance between said imaging apparatus and the object in each of the image regions, and (ii) generate a depth map which indicates the calculated distance as a pixel value in each of the image regions,
   wherein said sensor drive control unit (13) is configured to control said sensor drive unit (12) and said image capture unit (14) such that said image capture unit (14) captures three kinds of images: (i) a near end image having a focal point at a near end of the object; (ii) a far end image having a focal point at a far end of the object; and (iii) the sweep image which is captured by exposure through a continuous shift of said image sensor from the far end to the near end of the object or from the near end to the far end of the object, and
   said blur amount calculation unit is configured to calculate, from (i) the near end image, (ii) the far end image, and (iii) the all-in-focus image, the amount of blur in each of the image regions of that other image.

2. The imaging apparatus according to Claim 1,
   wherein said sensor drive control unit (13) is configured to control said sensor drive unit (12) and said image capture unit (14) such that said image capture unit (14) continuously captures three captured images in a sequence of the near end image, the sweep image, and the far end image or in a sequence of the far end image, the sweep image, and the near end image.

3. The imaging apparatus according to Claim 1,
   wherein an optical system disposed at an image space of said image sensor (11) has optical characteristics in image-space telecentricity in which a size of an image is unchanged even after a sweep.

4. The imaging apparatus according to Claim 1,
   wherein said blur amount calculation unit (16) is configured to calculate an amount of blur in each of the image regions by assuming that characteristics of an optical system disposed at an image space of said image sensor (11) are a Gaussian model.

5. The imaging apparatus according to Claim 1,
   wherein said blur amount calculation unit (16) is configured to calculate an amount of blur in each of the image regions by assuming that characteristics of an optical system disposed at an image space of said image sensor (11) are a pillbox model.

6. The imaging apparatus according to Claim 1,
   wherein said blur amount calculation unit (16) is configured to calculate an amount of blur in each of the image regions based on Point Spread Function (PSF) characteristics by assuming that characteristics of an optical system disposed at a front stage of said image sensor (11) are the PSF characteristics of said optical system actually measured in advance.

7. An imaging method of generating, based on an image of an object captured by an imaging apparatus having an image sensor, a depth map indicating a distance from the imaging apparatus to the object, said imaging method comprising:

capturing a plurality of images captured at focal points different from each other and one of the images is a sweep image that is captured during exposure through a shift of the position in the optical axis direction of said image sensor;

generating, from the captured sweep image, an all-in-focus image of which an entire region of the sweep image is focused; calculating an amount of blur in each of a plurality of image regions of another image different from the sweep image; and

calculating, from an amount of blur in each of the image regions of that other image and from an optical coefficient value of the imaging apparatus including a focal length of a lens, a distance between the imaging apparatus and the object in each of the image regions, and

generating a depth map which indicates the calculated distance as a pixel value in each of the image regions wherein during said capturing, capturing three kinds of images: (i) a near end image having a focal point at a near end of the object; (ii) a far end image having a focal point at a far end of the object; and (iii) the sweep image which is captured by exposure through a continuous shift of said image sensor from the far end to the near end of the object or from the near end to the far end of the object, and

wherein calculating, from (i) the near end image, (ii) the far end image, and (iii) the all-in-focus image, the amount of blur in each of the image regions of that other image.

8. A program which is recorded on a non-transitory computer-readable storage medium, the program causing a computer to execute the imaging method according to Claim 7.

9. An integrated circuit on which the image capture unit (14), the all-in-focus image generation unit (15), the blur amount calculation unit (16), and the depth map generation unit (17) are mounted, the units being included in the imaging apparatus according to Claim 1.


## Patentansprüche

1. Bildgebende Vorrichtung, die auf Basis eines Bildes eines Objekts eine Tiefenkarte erzeugt, die einen Abstand von der bildgebenden Vorrichtung zum Objekt anzeigt, wobei die bildgebende Vorrichtung Folgendes umfasst:

einen Bildsensor (11), der in einer Bilderfassungsebene Licht erfasst, das Licht für jedes Pixel in ein elektrisches Signal umwandelt und das elektrische Signal ausgibt;

eine Sensorantriebseinheit (12), die dazu ausgelegt ist, eine Position in einer optischen Achsrichtung des Bildsensors (11) beliebig zu verschieben;

eine Bilderfassungseinheit (14), die dazu ausgelegt ist, ein Bild, das vom Bildsensor (11) erfasst wurde, zu erfassen und das erfasste Bild zu halten;

eine Sensorantriebssteuereinheit (13), die dazu ausgelegt ist, Operationen der Sensorantriebseinheit (12) und der Bilderfassungseinheit (14) derart zu steuern, dass eine Vielzahl von Bildern in Brennpunkten erfasst werden, die sich voneinander unterscheiden, und eines der Bilder ein Sweep-Bild ist, das während der Belichtung bei einer Verschiebung der Position in der optischen Achsrichtung des Bildsensors erfasst wird;

eine Scharfbilderzeugungseinheit (15), die dazu ausgelegt ist, aus dem Sweep-Bild, das von der Bilderfassungseinheit (14) erfasst wurde, ein scharfes Bild zu erzeugen, von dem ein ganzer Bereich des Sweep-Bildes fokussiert ist;

eine Unschärfebetragsberechnungseinheit (16), die dazu ausgelegt ist, in jedem einer Vielzahl von Bildbereichen eines anderen Bildes, das sich vom Sweep-Bild unterscheidet, einen Betrag der Unschärfe zu berechnen; und

eine Tiefenkartenerzeugungseinheit (17), die dazu ausgelegt ist, (i) aus einem Betrag der Unschärfe in jedem der Bildbereiche jenes anderen Bildes, der von der Unschärfebetragsberechnungseinheit (16) berechnet wurde, und aus einem optischen Koeffizientenwert der bildgebenden Vorrichtung, einschließlich einer Brennweite einer Linse, des Abstands zwischen der bildgebenden Vorrichtung und dem Objekt in jedem der Bildbereiche, einen Betrag der Unschärfe zu berechnen und (ii) eine Tiefenkarte zu erzeugen, die den berechneten Abstand als Pixelwert in jedem der Bildbereiche anzeigt,

wobei die Sensorantriebssteuereinheit (13) dazu ausgelegt ist, die Sensorantriebseinheit (12) und die Bilderfassungseinheit (14) derart zu steuern, dass die Bilderfassungseinheit (14) drei Arten von Bildern erfasst: (i) ein Nahendebild, das einen Brennpunkt an einem nahen Ende des Objekts aufweist; (ii) ein Fernendebild, das einen Brennpunkt an einem fernen Ende des Objekts aufweist; und (iii) das Sweep-Bild, das durch Belichtung bei einer kontinuierlichen Verschiebung des Bildsensors vom fernen Ende zum nahen Ende des Objekts oder vom nahen Ende zum fernen Ende des Objekts erfasst wird, und

wobei die Unschärfebetragsberechnungseinheit dazu ausgelegt ist, aus (i) dem Nahendebild, (ii) dem Fernendebild und (iii) dem scharfen Bild in jedem der Bildbereiche jenes anderen Bildes den Betrag der Unschärfe zu berechnen.

2.  Bildgebende Vorrichtung nach Anspruch 1,
    wobei die Sensorantriebssteuereinheit (13) dazu ausgelegt ist, die Sensorantriebseinheit (12) und die Bilderfassungseinheit (14) derart zu steuern, dass die Bilderfassungseinheit (14) in einer Abfolge von Nahendebild, Sweep-Bild und Fernendebild oder in einer Abfolge von Fernendebild, Sweep-Bild und Nahendebild drei erfasste Bilder kontinuierlich erfasst.

3.  Bildgebende Vorrichtung nach Anspruch 1,
    wobei ein optisches System, das an einem Bildraum des Bildsensors (11) angeordnet ist, optische Eigenschaften hinsichtlich der Bildraumtelezentrizität aufweist, bei der eine Größe eines Bildes auch nach einem Sweep unverändert bleibt.

4.  Bildgebende Vorrichtung nach Anspruch 1,
    wobei die Unschärfebetragsberechnungseinheit (16) dazu ausgelegt ist, durch die Annahme, dass es sich bei Eigenschaften eines optischen Systems, das an einem Bildraum des Bildsensors (11) angeordnet ist, um ein Gauss-Modell handelt, in jedem der Bildbereiche einen Betrag der Unschärfe zu berechnen.

5.  Bildgebende Vorrichtung nach Anspruch 1,
    wobei die Unschärfebetragsberechnungseinheit (16) dazu ausgelegt ist, durch die Annahme, dass es sich bei Eigenschaften eines optischen Systems, das an einem Bildraum des Bildsensors (11) angeordnet ist, um ein Pillendosenmodell handelt, in jedem der Bildbereiche einen Betrag der Unschärfe zu berechnen.

6.  Bildgebende Vorrichtung nach Anspruch 1,
    wobei die Unschärfebetragsberechnungseinheit (16) dazu ausgelegt ist, auf Basis von Eigenschaften der Punktspreizfunktion (PSF) durch die Annahme, dass es sich bei Eigenschaften eines optischen Systems, das an einer vorderen Stufe des Bildsensors (11) angeordnet ist, um die PSF-Eigenschaften des optischen Systems handelt, die tatsächlich vorab gemessen wurden, in jedem der Bildbereiche einen Betrag der Unschärfe zu berechnen.

7.  Bildgebungsverfahren zum Erzeugen auf Basis eines Bildes eines Objekts, das von einer bildgebenden Vorrichtung erfasst wurde, die einen Bildsensor aufweist, einer Tiefenkarte, die einen Abstand von der bildgebenden Vorrichtung zum Objekt anzeigt, wobei das Bildgebungsverfahren Folgendes umfasst:

    Erfassen einer Vielzahl von Bildern in Brennpunkten, die sich voneinander unterscheiden, und eines der Bilder ein Sweep-Bild ist, das während der Belichtung bei einer Verschiebung der Position in der optischen Achsrichtung des Bildsensors erfasst wird;
    Erzeugen aus dem erfassten Sweep-Bild eines scharfen Bildes, von dem ein ganzer Bereich des Sweep-Bildes fokussiert ist;
    Berechnen eines Betrags der Unschärfe in jedem einer Vielzahl von Bildbereichen eines anderen Bildes, das sich vom Sweep-Bild unterscheidet; und
    Berechnen aus einem Betrag der Unschärfe in jedem der Bildbereiche jenes anderen Bildes und aus einem optischen Koeffizientenwert der bildgebenden Vorrichtung, einschließlich einer Brennweite einer Linse, eines Abstands zwischen der bildgebenden Vorrichtung und dem Objekt in jedem der Bildbereiche, und
    Erzeugen einer Tiefenkarte, die den berechneten Abstand als Pixelwert in jedem der Bildbereiche anzeigt
    wobei während des Erfassens Erfassen von drei Arten von Bildern: (i) ein Nahendebild, das einen Brennpunkt an einem nahen Ende des Objekts aufweist; (ii) ein Fernendebild, das einen Brennpunkt an einem fernen Ende des Objekts aufweist; und (iii) das Sweep-Bild, das durch Belichtung bei einer kontinuierlichen Verschiebung des Bildsensors vom fernen Ende zum nahen Ende des Objekts oder vom nahen Ende zum fernen Ende des Objekts erfasst wird, und
    wobei Berechnen des Betrags der Unschärfe in jedem der Bildbereiche jenes anderen Bildes aus (i) dem Nahendebild, (ii) dem Fernendebild und (iii) dem scharfen Bild.

8.  Programm, das auf einem nichttransitorischen computerlesbaren Speichermedium aufgezeichnet ist, wobei das Programm einen Computer veranlasst, das Bildgebungsverfahren nach Anspruch 7 auszuführen.

9. Integrierte Schaltung, auf der die Bilderfassungseinheit (14), die Scharfbilderzeugungseinheit (15), die Unschärfebetragsberechnungseinheit (16) und die Tiefenkartenerzeugungseinheit (17) montiert sind, wobei die Einheiten in der bildgebenden Vorrichtung nach Anspruch 1 beinhaltet sind.

**Revendications**

1. Appareil imageur qui produit, sur la base d'une image d'objet, une carte de profondeur indiquant une distance dudit appareil imageur à l'objet, ledit appareil imageur comprenant :

   un capteur d'image (11) qui capture la lumière dans un plan de capture d'image, convertit la lumière en un signal électrique pour chaque pixel, et délivre le signal électrique ;
   une unité d'entraînement de capteur (12) conçue pour décaler arbitrairement une position dans une direction d'axe optique dudit capteur d'image (11) ;
   une unité de capture d'image (14) conçue pour capturer une image capturée par ledit capteur d'image (11), et conserver l'image capturée ;
   une unité de commande d'entraînement de capteur (13) conçue pour commander des opérations de ladite unité d'entraînement de capteur (12) et de ladite unité de capture d'image (14) de manière qu'une pluralité d'images soit capturée à des points focaux différents les uns des autres et que l'une des images soit une image de balayage qui est capturée au cours de l'exposition par décalage de la position dans la direction de l'axe optique dudit capteur d'image ;
   une unité de génération d'image omnifocale (15) conçue pour produire, à partir de l'image de balayage capturée par ladite unité de capture d'image (14), une image omnifocale dont une région entière de l'image de balayage est focalisée ;
   une unité de calcul de quantité de flou (16) conçue pour calculer une quantité de flou dans chaque région d'une pluralité de régions d'image d'une autre image, différente de l'image de balayage ; et
   une unité de génération de carte de profondeur (17) conçue pour (i) calculer, à partir d'une quantité de flou dans chacune des régions d'image de cette autre image, calculée par ladite unité de calcul de quantité de flou (16), et à partir d'une valeur de coefficient optique dudit appareil imageur incluant une longueur focale de lentille, la distance entre ledit appareil imageur et l'objet dans chacune des régions d'image, et (ii) produire une carte de profondeur qui indique la distance calculée sous forme de valeur de pixel dans chacune des régions d'image, dans lequel ladite unité de commande d'entraînement de capteur (13) est conçue pour commander ladite unité d'entraînement de capteur (12) et ladite unité de capture d'image (14) de manière que ladite unité de capture d'image (14) capture trois sortes d'images : (i) une image d'extrémité proche ayant un point focal à une extrémité proche de l'objet ; (ii) une image d'extrémité éloignée ayant un point focal à une extrémité éloignée de l'objet ; et (iii) l'image de balayage qui est capturée par exposition par décalage continu dudit capteur d'image de l'extrémité éloignée à l'extrémité proche de l'objet ou de l'extrémité proche à l'extrémité éloignée de l'objet, et ladite unité de calcul de quantité de flou est conçue pour calculer, à partir (i) de l'image d'extrémité proche, (ii) de l'image d'extrémité éloignée, et (iii) de l'image omnifocale, la quantité de flou dans chacune des régions d'image de cette autre image.

2. Appareil imageur selon la revendication 1,
   dans lequel ladite unité de commande d'entraînement de capteur (13) est conçue pour commander ladite unité d'entraînement de capteur (12) et ladite unité de capture d'image (14), de manière que ladite unité de capture d'image (14) capture en continu trois images capturées en une séquence de l'image d'extrémité proche, l'image de balayage et l'image d'extrémité éloignée ou en une séquence de l'image d'extrémité éloignée, l'image de balayage et l'image d'extrémité proche.

3. Appareil imageur selon la revendication 1,
   dans lequel un système optique disposé au niveau d'un espace image dudit capteur d'image (11) possède des caractéristiques optiques de télécentricité de l'espace-image dans lesquelles une taille d'image est inchangée même après un balayage.

4. Appareil imageur selon la revendication 1,
   dans lequel ladite unité de calcul de quantité de flou (16) est conçue pour calculer une quantité de flou dans chacune des régions d'image en supposant que des caractéristiques d'un système optique disposé au niveau d'un espace image dudit capteur d'image (11) sont un modèle gaussien.

**5.** Appareil imageur selon la revendication 1,
dans lequel ladite unité de calcul de quantité de flou (16) est conçue pour calculer une quantité de flou dans chacune des régions d'image, en supposant que des caractéristiques d'un système optique disposé au niveau d'un espace image dudit capteur d'image (11) sont un modèle de type *pillbox.*

**6.** Appareil imageur selon la revendication 1,
dans lequel ladite unité de calcul de quantité de flou (16) est conçue pour calculer une quantité de flou dans chacune des régions d'image sur la base de caractéristiques de réponse percussionnelle (PSF, *point spread function*), en supposant que des caractéristiques d'un système optique disposé au niveau d'un étage frontal dudit capteur d'image (11) sont les caractéristiques PSF dudit système optique réellement mesurées à l'avance.

**7.** Procédé d'imagerie pour produire, sur la base d'une image d'objet capturée par un appareil imageur comportant un capteur d'image, une carte de profondeur indiquant une distance dudit appareil imageur à l'objet, ledit procédé d'imagerie comprenant les étapes suivantes :

capturer une pluralité d'images capturées à des points focaux différents les uns des autres et l'une des images est une image de balayage qui est capturée au cours de l'exposition par décalage de la position dans la direction de l'axe optique dudit capteur d'image ;
produire, à partir de l'image de balayage capturée, une image omnifocale dont une région entière de l'image de balayage est focalisée ;
calculer une quantité de flou dans chaque région d'une pluralité de régions d'image d'une autre image, différente de l'image de balayage ; et
calculer, à partir d'une quantité de flou dans chacune des régions d'image de cette autre image et à partir d'une valeur de coefficient optique de l'appareil imageur incluant une longueur focale de lentille, une distance entre l'appareil imageur et l'objet dans chacune des régions d'image, et
produire une carte de profondeur qui indique la distance calculée sous forme de valeur de pixel dans chacune des régions d'image,
dans lequel au cours de ladite capture, capturer trois sortes d'images : (i) une image d'extrémité proche ayant un point focal à une extrémité proche de l'objet ; (ii) une image d'extrémité éloignée ayant un point focal à une extrémité éloignée de l'objet ; et (iii) l'image de balayage qui est capturée par exposition par décalage continu dudit capteur d'image de l'extrémité éloignée à l'extrémité proche de l'objet ou de l'extrémité proche à l'extrémité éloignée de l'objet, et
dans lequel calculer, à partir (i) de l'image d'extrémité proche, (ii) de l'image d'extrémité éloignée, et (iii) de l'image omnifocale, la quantité de flou dans chacune des régions d'image de cette autre image.

**8.** Programme qui est enregistré sur un support de stockage non transitoire lisible par ordinateur, le programme amenant un ordinateur à exécuter le procédé d'imagerie selon la revendication 7.

**9.** Circuit intégré sur lequel sont montées l'unité de capture d'image (14), l'unité de génération d'image omnifocale (15), l'unité de calcul de quantité de flou (16) et l'unité de génération de carte de profondeur (17), les unités étant incluses dans l'appareil imageur selon la revendication 1.

FIG. 1

# FIG. 2

Distance calculation step

Image capture step

START

S1 — Shift sensor to position 1

S2 — Captured image A

S3 — Captured image B while shifting lens to position 2

S4 — Captured image C at position 2

S5 — Generate all-in-focus image D from image B

All-in-focus image generation step

S6 — Calculate blur radius $d_{1i,j}$ at position 1 from image A and all-in-focus image D

S7 — Calculate blur radius $d_{2i,j}$ at position 2 from image C and all-in-focus image D

S8 — Calculate focal point $v_{i,j}$ from blur radius $d_{1i,j}$, $d_{2i,j}$

S9 — Calculate distance $u_{i,j}$ to object from focal point $v_{i,j}$

Complete all-in-focus region processing?

N → Shift to next image region

Y

END

EP 2 584 309 B1

# FIG. 3

EP 2 584 309 B1

# FIG. 4

FIG. 5

EP 2 584 309 B1

# FIG. 6

(a)

(b)

# FIG. 7

(a)

(b)

# FIG. 8

(a)

(b)

# FIG. 9

(a)

(b)

FIG. 10

FIG. 11

FIG. 12

EP 2 584 309 B1

## FIG. 13

## FIG. 14

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2963990 B

• US 20070019883 A1

**Non-patent literature cited in the description**

• **A. P. PENTLAND.** A new sense for depth of field. *IEEE Transaction on Pattern Analysis and Machine Intelligence,* 1987, vol. 9 (4), 523-531

• **H. NAGAHARA ; S. KUTHIRUMMAL ; C. ZHOU ; S. NAYAR.** Flexible depth of field photography. *Proc. European Conference on Computer Vision,* 2008, vol. 4, 60-73